# EUROPEAN PATENT APPLICATION

(11) **EP 2 905 941 A1**
(43) Date of publication of application: **12.08.2015**
(21) Application number: 15154327.9
(22) Date of filing: 09.02.2015
(51) Int. Cl.: H04L 29/06

(54) **Authentication processing system**

(30) Priority: 10.02.2014 JP 2014023036
(71) Applicant: Gurunavi, Inc., Chiyoda-ku Tokyo 100-0006 (JP)
(72) Inventor: Hanashima, Daisuke, Tokyo, 100-0006 (JP); Inoue, Tomoyuki, Tokyo, 100-0006 (JP)
(74) Representative: Kuhnen & Wacker

(57) **Abstract**

Disclosed is an authentication processing system (1) which authenticates the use of a facility by the user using a portable communication terminal (2) to be used by the user and an authentication processing server (3). The authentication processing system (1) includes a first authentication information acquisition processing unit (20) which acquires first authentication information arranged in the facility, a second authentication information acquisition processing unit (21) which acquires second authentication information for identifying the facility based on a GPS function, and an authentication processing unit (33) which compares the received first authentication information and second authentication information with first authentication information and second authentication information stored in a facility information storage unit (31) and determines that the user is using the facility when the comparison match each other or are within a predetermined range.

## Description

### BACKGROUND OF THE INVENTION

### 1. Field of the Invention

The present invention relates to an authentication processing system which authenticates the use of various facilities, such as a restaurant, by a user.

### 2. Description of Related Art

When a user visits various facilities, such as a restaurant and a lodging facility, the use of the facilities by the user is authenticated (checked in), thereby assigning points from the facilities for the user. Since many of the points assigned for the user are used for payment of a charge, the user performs authentication processing positively. For the facilities, the authentication processing becomes marketing means or customer attraction means. For this reason, the authentication processing is advantageous for both the user and the facilities.

There are various methods which perform the authentication processing. A method in which an electric wave, such as Bluetooth (Registered Trademark) or iBeacon (Registered Trademark), usable in a facility is transmitted inside the facility and is detected by a portable communication terminal to be used by a user to authenticate (check-in) the use of the facility by the user is known.

A known example of check-in using iBeacon is described in "What is iBeacon? A method of utilizing a function for a retail business or an 020 service provider to remark has been considered (http://leonisand.co/ibeacon/)", Leonis & Co. Inc.

As in "What is iBeacon? A method of utilizing a function for a retail business or an 020 service provider to remark has been considered (http://leonisand.co/ibeacon/)", Leonis & Co. Inc., when an electric wave in a facility, such as Bluetooth or iBeacon, is detected to authenticate the use of the facility, there is a concern that the electric wave leaks outside the facility. In this case, there is a problem in that authentication processing is performed even if a user is outside the facility. Other than "What is iBeacon? A method of utilizing a function for a retail business or an 020 service provider to remark has been considered (http://leonisand.co/ibeacon/)", Leonis & Co. Inc., there is a method which authenticates the use of facilities using a position detection function by a GPS; however, this method has a problem of accuracy, and may not necessarily detect the position accurately.

A method which provides a reading device configured to perform noncontact communication at a predetermined location of a facility, for example, near a cash register and provides a portable communication terminal there to perform visit authentication is also known. However, in this case, it is not possible to identify a location inside the facility that the user uses (which table, location, or the like the user uses). Providing the reading device on each table or the like requires cost. Even if the reading device can be provided on each table or the like, when the reading device is stolen or the like and brought outside the facility, it is not possible to determine whether or not the user is inside the facility.

Accordingly, there is demand for a system capable of accurately performing authentication processing including a location inside a facility that a user uses.

### SUMMARY OF THE INVENTION

The invention relates to an authentication processing system.

An aspect of the invention relates to an authentication processing system which authenticates the use of a facility by a user using a portable communication terminal to be used by the user and an authentication processing server. The portable communication terminal includes a first authentication information acquisition processing unit which acquires first authentication information arranged in the facility, a second authentication information acquisition processing unit which acquires second authentication information for identifying the facility based on a GPS function, and an authentication information transmission processing unit which transmits the acquired first authentication information and second authentication information to the authentication processing server. The authentication processing server includes a facility information storage unit which stores the first authentication information and the second authentication information for each facility, an authentication information reception processing unit which receives the first authentication information and the second authentication information from the authentication information transmission processing unit, and an authentication processing unit which compares the received first authentication information and second authentication information with the first authentication information and the second authentication information stored in the facility information storage unit, and when the comparison match each other or are within a predetermined range, determines that the user is using the facility.

With the use of the authentication processing system according to the above aspect, even if an electric wave leaks outside the facility, it is possible to accurately determine whether or not the user is inside the facility, thereby performing authentication processing. Furthermore, even when a reading device provided inside the facility is stolen or the like, it is possible to accurately determine whether or not the user is inside the facility, thereby performing authentication processing. Furthermore, it is possible to identify a location inside the facility that the user uses. In the above-described aspect, the second authentication information is based on positional information of a radio transmission device or a GPS function, and a radio wave leaks to the outside or positional information is inaccurate. The first authentication information for supplementing radio wave leakage or inaccurate positional information can efficiently function.

In the above aspect, the first authentication information acquisition processing unit may read a two-dimensional code, in which the first authentication information is encoded, by an imaging device of the portable communication terminal or may read the first authentication information stored in an IC chip through noncontact communication with the portable communication terminal to acquire the first authentication information.

In the above aspect, the first authentication information is authentication information for identifying a location inside the facility. For this reason, although various methods can be used, with the configuration as the above-described aspect, it is possible to achieve implementation with simple means. An enormous amount of information can be held in the two-dimensional code or the IC chip, and store position information, store information, table information, or chair information can be arranged in an extremely small occupied area.

In the above aspect, the first authentication information may be arranged in at least one of a table, a chair, a wall, and an object placed on the table.

The first authentication information can be arranged in an existing facility without new facility investment. Therefore, it is possible to maintain the same facility area without narrowing the area of the facility.

In the above aspect, the first authentication information may be information for identifying a location inside the facility.

In the above aspect, since the first authentication information identifies a location inside the facility, a facility manager can know a location inside the facility where the user is allocated in detail. Therefore, it is possible to omit communication between the user and the facility manager and to reduce wasting of commodities due to providing commodities other than user's preference.

In the above aspect, the first authentication information may include information for identifying a location inside the facility. The authentication processing unit may compare the received first authentication information and second authentication information with the first authentication information and the second authentication information stored in the facility information storage unit, and when the comparison match each other or are within a predetermined range, may register information regarding the use of the facility in the user information storage unit in association with the received user identification information.

With the use of the authentication processing system according to the above aspect, even if an electric wave leaks outside the facility, it is possible to accurately determine whether or not the user is inside the facility, thereby performing authentication processing. Furthermore, even when a reading device provided inside the facility is stolen or the like, it is possible to accurately determine whether or not the user is inside the facility, thereby performing authentication processing. Furthermore, it is possible to identify a location inside the facility that the user uses.

With the use of the authentication processing system according to the above aspect of the invention, it is possible to accurately authenticate the use of a facility. Furthermore, it is possible to identify a location inside the facility that the user uses.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
Fig. 1 is a conceptual diagram schematically showing the concept of processing of an authentication processing system according to an embodiment of the invention;
Fig. 2 is a conceptual diagram schematically showing an example of the system configuration of an authentication processing system according to the embodiment of the invention;
Fig. 3 is a diagram schematically showing an example of the hardware configuration of a computer which functions as the authentication processing system according to the embodiment of the invention;
Fig. 4 is a flowchart schematically showing an example of a processing procedure of the authentication processing system according to the embodiment of the invention;
Fig. 5 is a diagram schematically showing an example of a user information storage unit;
Fig. 6 is a diagram schematically showing an example of a facility information storage unit; and
Fig. 7 is a diagram schematically showing an example of an authentication information storage unit.

### DETAILED DESCRIPTION OF EMBODIMENTS

### [First Embodiment]

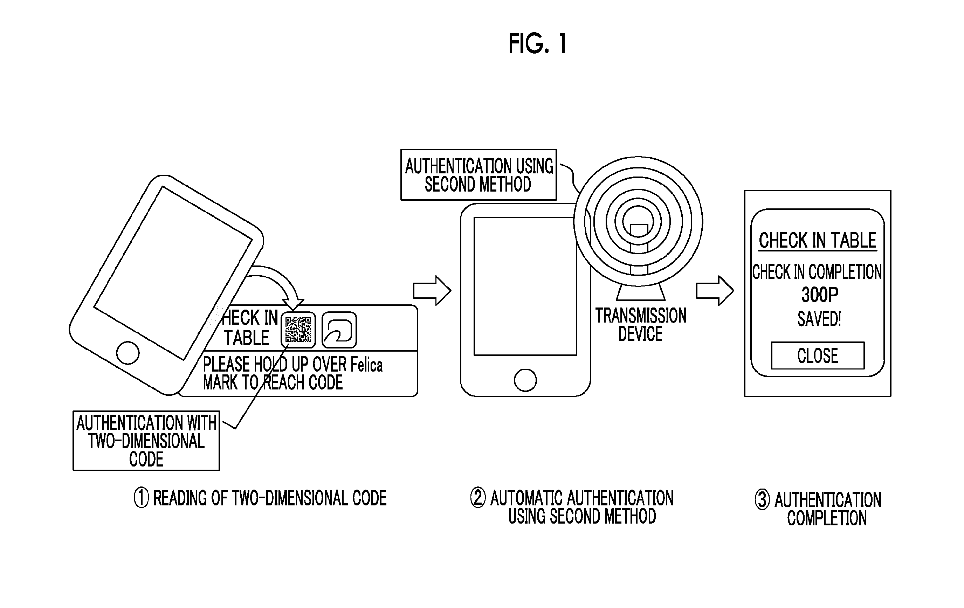

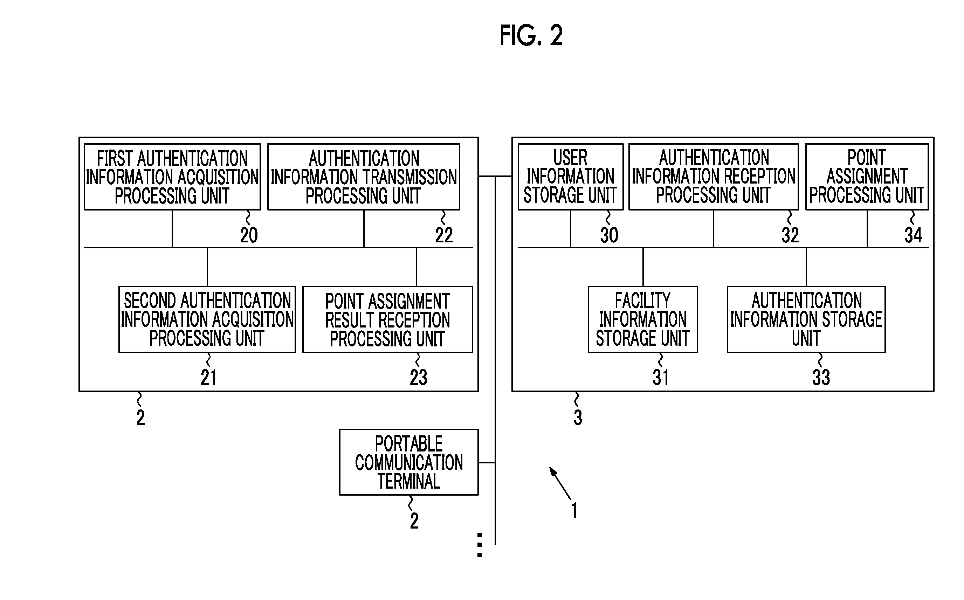

Fig. 1 schematically shows an example of the concept of processing of an authentication processing system 1 according to an embodiment of the invention. Fig. 2 schematically shows an example of the system configuration of the authentication processing system 1. As hardware for implementing the authentication processing system 1, there are a mobile phone including a smartphone, a portable terminal, such as a PHS, a PDA, or a tablet computer, a personal computer, a server, and the like. The authentication processing system 1 has a plurality of pieces of hardware equipment including at least a portable communication terminal 2 and an authentication processing server 3.

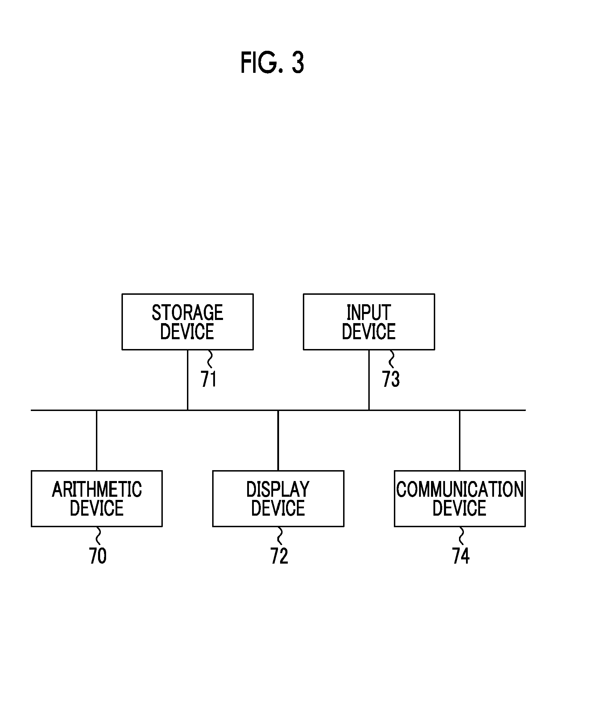

Fig. 3 is a diagram schematically showing an example of the hardware configuration of a computer which functions as the authentication processing system 1 according to the embodiment of the invention. Each of the portable communication terminal 2 and the authentication processing server 3 has an arithmetic device 70, such as a CPU, which executes arithmetic processing of a program, a storage device 71, such as a RAM or a ROM, which stores information, a display device 72, such as a display, an input device 73 of various input interfaces, such as a mouse, a keyboard, or a touch panel, and a communication device 74 which transmits and receives a processing result of the arithmetic device 70 or information stored in the storage device 71 through a network, such as a public telephone network, Internet, or an LAN. Each function (means) implemented on the authentication processing system 1 is executed through processing by reading means (program, module, or the like) for executing the processing into the arithmetic device 70. When each function uses information stored in the storage device 71 in processing the function, information is read from the storage device 71 and the read information is appropriately used in the processing in the arithmetic device 70.

The function of each means in the embodiment of the invention is only theoretically distinguished, and may physically or in reality constitute the same region.

Returning to Fig. 2, the portable communication terminal 2 is a portable communication terminal (computer), such as a mobile phone, a smart phone, a PHS, a PDA, a tablet terminal, or a notebook computer, which is used by a user of a facility. The portable communication terminal 2 includes a hardware configuration necessary for implementing respective authentication processing in a first authentication information acquisition processing unit 20 and a second authentication information acquisition processing unit 21 described below, for example, an imaging device, an IC chip reading device, radio communication means, such as Bluetooth or iBeacon, and the like within a range necessary for implementing at least authentication processing.

The portable communication terminal 2 has a first authentication information acquisition processing unit 20, a second authentication information acquisition processing unit 21, an authentication information transmission processing unit 22, and a point assignment result reception processing unit 23.

The first authentication information acquisition processing unit 20 reads a code, an IC chip, or the like attached at a predetermined location of the user inside the facility, for example, at a predetermined location of a table, a chair, a wall, or an object (menu, seasoning, call button, or the like) on the table, and executes first authentication processing. The authentication processing in the first authentication information acquisition processing unit 20 is authentication processing for identifying the location of the user inside the facility.

For example, when the code is a two-dimensional code, the first authentication information acquisition processing unit 20 activates the imaging device in the portable communication terminal 2 and reads the code with the imaging device, thereby reading coded first authentication information. The first authentication information includes information for identifying a location inside the facility, for example, a table number, a chair number, or the like. Of course, the first authentication information associates store information to the table number, the chair number, or the like.

The IC chip is embedded in a reading device which can perform near field radio communication in a contact or noncontact manner, or the like; however, the invention is not limited thereto. The first authentication information acquisition processing unit 20 activates an RFID function in the portable communication terminal 2 and performs near field radio communication with the IC chip in a noncontact manner, thereby reading the first authentication information stored in the IC chip.

The second authentication information acquisition processing unit 21 receives a radio wave including second authentication information transmitted from a transmission device in the facility by the communication device 74 of the portable communication terminal 2 to acquire the second authentication information. When positional information is used as the second authentication information, a GPS function of the portable communication terminal 2 is activated to acquire positional information including latitude and longitude, and the positional information is set as the second authentication information. The second authentication information includes information for identifying a facility used by the user, for example, store identification information, a store name, positional information including latitude and longitude, or the like.

The authentication information transmission processing unit 22 transmits the respective authentication information acquired by the first authentication information acquisition processing unit 20 and/or the second authentication information acquisition processing unit 21 to the authentication processing server 3 described below. The authentication information to be transmitted may be either the first authentication information or the second authentication information. In addition to the authentication information, identification information (hereinafter, referred to as "user identification information") for identifying the user and/or the portable communication terminal 2 is transmitted.

The point assignment result reception processing unit 23 receives information regarding a point assignment result of point assignment processing from the authentication processing server 3 and displays the received information on the display device 72 of the portable communication terminal 2.

The authentication processing server 3 has a user information storage unit 30, a facility information storage unit 31, an authentication information reception processing unit 32, an authentication information storage unit 33, and a point assignment processing unit 34.

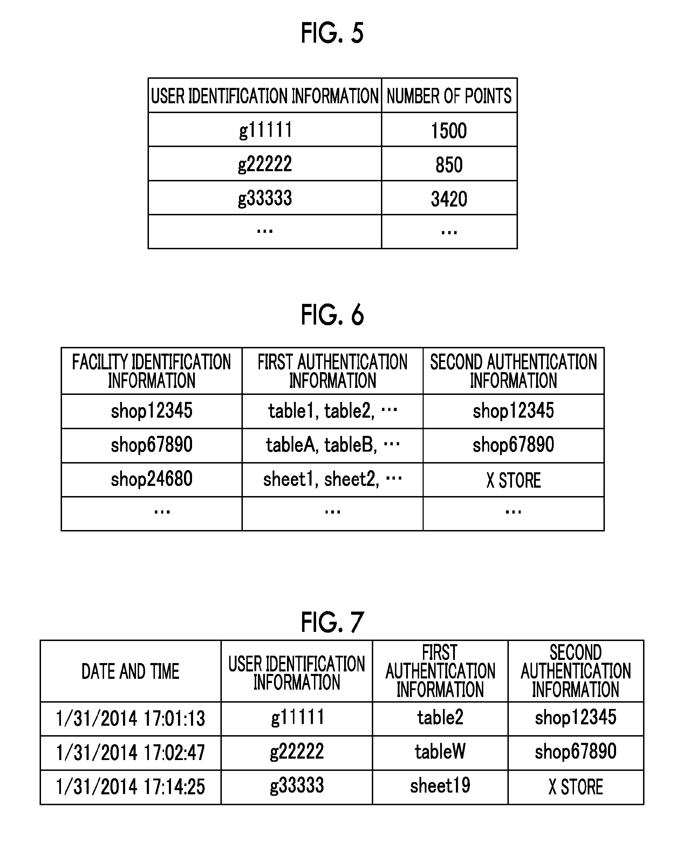

The user information storage unit 30 stores points for each user. Fig. 5 schematically shows an example of the user information storage unit 30. In Fig. 5, the user identification information refers to information for identifying the user or the portable communication terminal 2.

The facility information storage unit 31 stores information regarding a facility. As information regarding the facility, facility identification information for identifying a facility, first authentication information, and second authentication information are stored. In addition, general information regarding the facility, such as a facility name and a contact address of the facility, may be stored. Fig. 6 schematically shows an example of the facility information storage unit 31.

The authentication information reception processing unit 32 receives the authentication information transmitted from the portable communication terminal 2.

The authentication information storage unit 33 stores the authentication information received by the authentication information reception processing unit 32 or information representing a facility, a location inside the facility, and a user who uses the location. Fig. 7 schematically shows an example of the authentication information storage unit 33. The authentication information storage unit 33 stores information representing date and time, the user identification information, the first authentication information, the second authentication information, and the like. It is possible to identify a facility and a location inside the facility to be used by the user with the first authentication information and the second authentication information.

The point assignment processing unit 34 assigns predetermined points for the user based on the authentication information and the user identification information received by the authentication information reception processing unit 32 and updates the points of the user stored in the user information storage unit 30. At the time of point assignment, the first authentication information and the second authentication information stored in the facility information storage unit 31 are compared with the first authentication information and the second authentication information received by the authentication information reception processing unit 32, and it is determined whether or not both match each other or are within a predetermined range. When both match each other or are within the predetermined range, predetermined points are assigned. Furthermore, since it is possible to identify a facility used by the user based on the first authentication information and the second authentication information, prescribed points may be assigned for each facility.

In the above description, although the processing of the second authentication information acquisition processing unit 21 is executed after the processing of the first authentication information acquisition processing unit 20 is executed, the order is not limited, and may be reversed. The processing of both authentication information acquisition processing units may be performed simultaneously. The authentication information transmission processing unit 22 may be configured to transmit the first authentication information and the second authentication information to the authentication processing server 3 simultaneously or to transmit the first authentication information to the authentication processing server 3 after the processing of the first authentication information acquisition processing unit 20 ends and to transmit the second authentication information to the authentication processing server 3 after the processing of the second authentication information acquisition processing unit 21 ends.

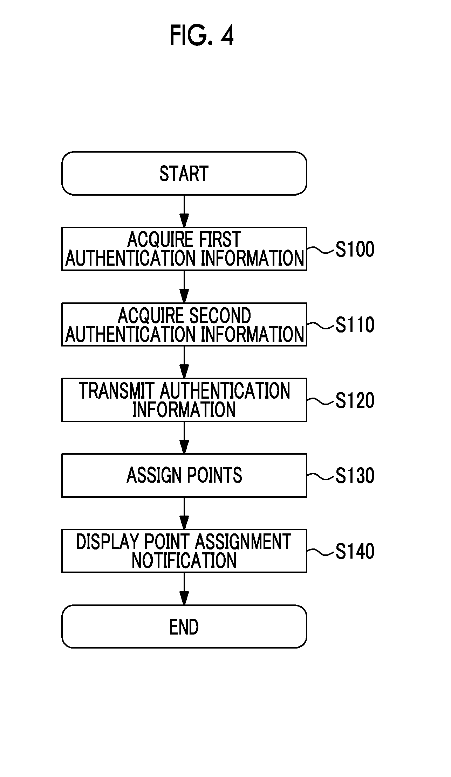

An example of a processing procedure of the authentication processing system 1 according to a first embodiment of the invention will be described referring to the flowchart of Fig. 4. In the following description, a facility is a restaurant, a seal with a two-dimensional code printed thereon is attached to a table in which the first authentication information is provided, and the second authentication information is transmitted from a radio transmission device provided inside the restaurant by Bluetooth will be described.

The user enters the restaurant and sits at the table. Then, the user performs a predetermined operation with the portable communication terminal 2 to activate an application program for using the authentication processing system 1 according to the embodiment of the invention, and the first authentication information acquisition processing unit 20 reads the two-dimensional code printed on the seal attached to the table using the imaging device of the portable communication terminal 2. The first authentication information is acquired with the portable communication terminal 2 through the reading (S100).

If the first authentication information is acquired normally, the second authentication information acquisition processing unit 21 in the application program activates a communication function by Bluetooth in the portable communication terminal 2 and receives the second authentication information by Bluetooth transmitted from the radio transmission device of the restaurant (S110).

With this, in the portable communication terminal 2, since the first authentication information and the second authentication information can be acquired, the authentication information transmission processing unit 22 transmits information, such as the first authentication information, the second authentication information, and the user identification information, to the predetermined authentication processing server 3 (S120).

If information transmitted from the portable communication terminal 2 is received by the authentication information reception processing unit 32, the point assignment processing unit 34 compares the first authentication information and the second authentication information stored in the facility information storage unit 31 with the received first authentication information and second authentication information to determine whether or not the comparison match each other.

When the comparison match each other, since it can be determined that the user uses the restaurant, a predetermined number of points are added to the points of the user stored in the user information storage unit 30 based on the received user identification information to update the points (S130). For example, when the original points are "1500" points and the number of points to be added is "10", the number of points of the user of the user information storage unit 30 is updated to "1510" points and stored. The authentication information reception processing unit 32 stores the authentication information in the authentication information storage unit 33. Instead of storing the authentication information as it is, information representing a restaurant, a table, and a user who uses the table of the restaurant may be stored based on the user identification information, the first authentication information, and the second authentication information. That is, information regarding date and time, information regarding the restaurant, information regarding the location of use, and information regarding the user, and the like may be stored in the authentication information storage unit 33.

When the point assignment processing unit 34 cannot determine that the first authentication information and the second authentication information stored in the facility information storage unit 31 match the received first authentication information and second authentication information as a result of comparison, the infomation indicating that authentication has not been performed normally is transmitted to the portable communication terminal 2.

If the number of points is updated, the point assignment processing unit 34 gives notification of point assignment to the portable communication terminal 2. If the notification is received by the point assignment result reception processing unit 23 of the portable communication terminal 2, as shown in Fig. 1, information regarding the point assignment result is displayed on the display device 72 (S140).

As described above, the two-stage authentication processing is performed, whereby it is possible to perform accurate visit authentication and to identify a location that the user uses. In particular, since the authentication information stored in the authentication information storage unit 33 can identify a user, a restaurant used by the user, a table at which the user sits inside the restaurant, and the like, the authentication information has extremely high effectiveness as marketing information.

### [Second Embodiment]

Next, as a second embodiment of the authentication processing system 1 of the invention, a case where a two-dimensional code is used as the first authentication information as in the first embodiment and positional information by a GPS is used as the second authentication information will be described.

The processing to S100 is the same as in the first embodiment.

If the first authentication information is acquired normally, the second authentication information acquisition processing unit 21 in the application program activates a GPS function in the portable communication terminal 2 and acquires positional information including latitude, longitude, and the like (S110).

With this, in the portable communication terminal 2, since the first authentication information and the second authentication information can be acquired, the authentication information transmission processing unit 22 transmits information, such as the first authentication information, the second authentication information, and the user identification information, to the predetermined authentication processing server 3 (S120).

If the authentication information transmitted from the portable communication terminal 2 is received by the authentication information reception processing unit 32, the point assignment processing unit 34 compares the first authentication information and the second authentication information stored in the facility information storage unit 31 with the received first authentication information and second authentication information to determine whether or not the comparison match each other or are within a predetermined range. In particular, since the positional information is used as the second authentication information, some errors may occur. Accordingly, even if the positional information does not completely match the positional information stored as the second authentication information in the facility information storage unit 31, when an error is within a predetermined range, it is determined that the comparison match each other.

The processing after S130 can be executed in the same manner as in the first embodiment.

### [Third Embodiment]

Next, as a third embodiment of the authentication processing system 1 of the invention, a case where the first authentication information is acquired by reading an IC chip storing the first authentication information provided in a table, and the second authentication information is transmitted from a radio transmission device provided inside a restaurant by Bluetooth in the same manner as in the first embodiment will be described.

The user enters the restaurant and sits at the table. Then, the user holds up (approaches) the portable communication terminal 2 over the IC chip provided in the table. If the portable communication terminal 2 approaches the IC chip, transmission and reception of information are performed through near field radio communication. With this, the first authentication information acquisition processing unit 20 of the portable communication terminal 2 acquires the first authentication information from the IC chip (S100).

If the first authentication information is acquired normally, as in the first embodiment, the second authentication information acquisition processing unit 21 in the application program activates a communication function by Bluetooth in the portable communication terminal 2 and receives the second authentication information by Bluetooth transmitted from the radio transmission device of the restaurant (S110).

The processing after S120 can be executed in the same manner as in the first embodiment and the second embodiment.

### [Fourth Embodiment]

Next, as a fourth embodiment of the authentication processing system 1 of the invention, a case where an IC chip is used for the first authentication information as in the third embodiment, and positional information by a GPS is used for the second authentication information as in the second embodiment will be described.

The user enters the restaurant and sits the table. Then, the user holds up (approaches) the portable communication terminal 2 over the IC chip provided in the table. If the portable communication terminal 2 approaches the IC chip, transmission and reception of information are performed through near field radio communication. With this, the first authentication information acquisition processing unit 20 of the portable communication terminal 2 acquires the first authentication information from the IC chip (S100).

If the first authentication information is acquired normally, the second authentication information acquisition processing unit 21 in the application program activates a GPS function in the portable communication terminal 2 and acquires positional information including latitude, longitude, and the like (S110).

The processing after S130 can be executed in the same manner as in the first to third embodiments.

### [Fifth Embodiment]

As the radio transmission device of the second authentication information in the foregoing embodiments, other than Bluetooth, various radio communication systems for near field radio communication, such as Wi-fi and iBeacon, can be used. In addition to a radio communication system for near field radio communication, such as Bluetooth, positional information by a GPS may be used.

## Claims

1. An authentication processing system (1) which authenticates the use of a facility by a user using a portable communication terminal (2) to be used by the user and an authentication processing server (3), the authentication processing system (1) **characterized in that**:
the portable communication terminal (2) includes
a first authentication information acquisition processing unit (20) which acquires first authentication information arranged in the facility,
a second authentication information acquisition processing unit (21) which acquires second authentication information for identifying the facility based on a GPS function, and
an authentication information transmission processing unit (22) which transmits the acquired first authentication information and second authentication information to the authentication processing server (3); and
the authentication processing server (3) includes
a facility information storage unit (31) which stores the first authentication information and the second authentication information for each facility,
an authentication information reception processing unit (32) which receives the first authentication information and the second authentication information from the authentication information transmission processing unit (22), and
an authentication processing unit (33) which compares the received first authentication information and second authentication information with the first authentication information and the second authentication information stored in the facility information storage unit (31), and when the comparison match each other or are within a predetermined range, determines that the user is using the facility.

2. The authentication processing system according to claim 1, wherein the first authentication information acquisition processing unit (20) reads a two-dimensional code, in which the first authentication information is encoded, by an imaging device of the portable communication terminal (2) or reads the first authentication information stored in an IC chip through noncontact communication using the portable communication terminal (2) to acquire the first authentication information.

3. The authentication processing system according to claim 1 or 2, wherein the first authentication information is arranged in at least one of a table, a chair, a wall, and an object placed on the table.

4. The authentication processing system according to any one of claims 1 to 3, wherein the first authentication information is information for identifying a location inside the facility.

5. The authentication processing system according to any one of claims 1 to 4, wherein the first authentication information includes at least one of a table number and a chair number.

6. The authentication processing system according to any one of claims 1 to 5, wherein:
the first authentication information includes information for identifying a location inside the facility; and
the authentication processing unit (33) compares the received first authentication information and second authentication information with the first authentication information and the second authentication information stored in the facility information storage unit (31), and when the comparison match each other or are within a predetermined range, registers information regarding the use of the facility in the user information storage unit (30) in association with the received user identification information.
